# EUROPÄISCHE PATENTANMELDUNG

(11) **EP 4 794 076 A1**
(43) Veröffentlichungstag der Anmeldung: **19.08.2026**
(21) Anmeldenummer: 25157570.0
(22) Anmeldetag: 13.02.2025
(51) Int. Cl.: H01M 50/213, H01M 50/291, H01M 50/293, H01M 50/249

(54) **BATTERIETRÄGERBAUTEIL ZUR AUFNAHME VON ALS ANTRIEBSENERGIESPEICHER FÜR EIN ELEKTRISCH ANGETRIEBENES FAHRZEUG DIENENDEN BATTERIEZELLEN SOWIE BATTERIETRÄGER**

(71) Anmelder: Nemak, S.A.B. de C.V., 66017 García, Nuevo León (MX)
(72) Erfinder: Pink, Alexander, 55299 Nackenheim (DE); Fleck, Thomas, 65520 Bad Camberg (DE); Morina, Driton, 92318 Neumarkt (DE)
(74) Vertreter: Cohausz & Florack

(57) **Zusammenfassung**

Die Erfindung betrifft ein Batterieträgerbauteil, insbesondere eine Batterieträgerwanne, zur zumindest teilweisen Aufnahme von als Antriebsenergiespeicher für ein elektrisch angetriebenes Fahrzeug dienenden Batteriezellen (10), umfassend: zumindest einen Batterieträgerboden (16), insbesondere eine Batterieträgerbodenplatte , sowie zumindest eine mittels eines Schaummaterials mit dem Batterieträgerboden (16) verbundene Schutzschicht (14), insbesondere Feuerschutzschicht. Die Erfindung betrifft ebenfalls einen Batterieträger.

## Beschreibung

Die Erfindung betrifft ein Batterieträgerbauteil, insbesondere eine Batterieträgerwanne, zur zumindest teilweisen Aufnahme von als Antriebsenergiespeicher für ein elektrisch angetriebenes Fahrzeug dienenden Batteriezellen, umfassend: einen Batterieträgerboden, insbesondere eine Batterieträgerbodenplatte, sowie zumindest eine mittels eines Schaummaterials mit dem Batterieträgerboden verbundene Schutzschicht, insbesondere Feuerschutzschicht. Die Erfindung betrifft ebenfalls einen Batterieträger zur Aufnahme von als Antriebsenergiespeicher für ein elektrisch angetriebenes Fahrzeug dienenden Batteriezellen. Die Erfindung betrifft weiterhin ein Verfahren zur Herstellung eines Batterieträgerbauteils.

Elektrisch angetriebene Fahrzeuge der hier in Rede stehenden Art führen in der Regel eine Mehrzahl von Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor oder mehreren Elektromotoren angetrieben wird. Alternativ kann das vorgenannte Batterieträgerbauteil bzw. der vorgenannte Batterieträger auch bei einem Hybrid-Fahrzeug eingesetzt werden, welches zusätzlich zu einem Elektromotor noch einen Verbrennungsmotor aufweist.

Da Batteriezellen ein verhältnismäßig hohes Gewicht aufweisen, stellt ihre Platzierung im Fahrzeug nicht nur aus statischer Sicht hohe Anforderungen an die Tragstruktur des Fahrzeugs, sondern beeinflusst zusätzlich auch die im Fahrbetrieb auftretenden dynamischen Kräfte.

Im Hinblick auf das Fahrverhalten hat sich eine Platzierung der einzelnen Batteriezellen im Bodenbereich des Fahrzeugs als vorteilhaft herausgestellt. Um dies zu ermöglichen, werden Batterieträger verwendet, die im Wesentlichen flach und plattenartig ausgebildet sind. Derartige Batterieträger lassen sich im Bodenbereich des Fahrzeugs anordnen und mit der Rohkarosserie des Fahrzeugs verbinden.

An die statische und dynamische Belastbarkeit voranstehend erläuterter Batterieträger und ebenfalls auch vorstehend genannter Batterieträgerbauteile werden demnach erhebliche Anforderungen gestellt. So sollen diese nicht nur in der Lage sein, die einzelnen Batteriezellen zu tragen, sondern auch die dynamischen Lasten aufnehmen, die im Fahrbetrieb des Fahrzeugs entstehen. Ebenfalls sollen Batterieträger bzw. Batterieträgerbauteile die aufgenommenen und bei signifikanter Beschädigung entzündlichen Batteriezellen im Falle eines Unfalls bestmöglich schützen.

Insbesondere sollen vorgenannte Batterieträgerbauteile sowie Batterieträger die aufgenommenen Zellen im Falle eines Feuers bestmöglich schützen und vorzugsweise dafür sorgen, dass ein durch eine Zelle verursachtes Feuer möglichst nicht auch die anderen aufgenommenen Zellen in Brand setzt. Insbesondere sollen die Folgen eines sogenannten "thermal runaway" der Batteriezellen verringert werden, indem beispielsweise die Gefahr eines Übergriffs eines Feuers auf andere Bereiche bzw. andere Zellen des Batterieträgerbauteils reduziert wird. Ebenfalls soll eine Schutzwirkung zur Umgebung des Batterieträgers ermöglicht werden, so dass ein durch eine Batteriezelle verursachtes Feuer keine anderen Bauteile oder Flüssigkeiten des Fahrzeugs entzünden kann.

Darüber hinaus ist es vorteilhaft, wenn ein Batterieträgerbauteil bzw. ein Batterieträger ein möglichst geringes Gewicht aufweist, so dass das Gesamtgewicht des Fahrzeugs durch das Batterieträgerbauteil bzw. den Batterieträger nicht übermäßig erhöht wird und Energie bei der Bewegung des Fahrzeugs eingespart werden kann. Weiterhin ist es vorteilhaft, Batterieträgerbauteil und Batterieträger möglichst kostengünstig herzustellen. Dies gestaltet sich als weitere Herausforderung, da trotz einer Gewichts- und Kostenreduktion die vorgenannten Anforderungen an die statische und dynamische Belastbarkeit von Batterieträgerbauteilen und Batterieträgern sowie die vorgenannten Sicherheitsanforderungen erfüllt werden sollen.

Vor diesem Hintergrund liegt der vorliegenden Erfindung die Aufgabe zugrunde, ein Batterieträgerbauteil sowie einen Batterieträger zur Verfügung zu stellen, welche in fertigungstechnischer günstiger Weise zu fertigen sind, möglichst leicht sind, die im Betrieb auftretenden Kräfte zuverlässig aufnehmen und eine ausreichende Sicherheit ermöglichen.

Die vorgenannte Aufgabe wird bei einem ersten Aspekt der vorliegenden Erfindung bei einem vorgenannten Batterieträgerbauteil, insbesondere bei einer Batterieträgerwanne, dadurch gelöst, dass die Schutzschicht eine Lochstruktur aufweist, und dass sich das Schaummaterial zumindest teilweise durch die Lochstruktur erstreckende Abstandshalter zur Beabstandung der Batteriezellen von der Schutzschicht aufweist.

Durch eine derartige Bauweise des Batterieträgerbauteils kann in konstruktionstechnisch günstiger Weise eine Verbundstruktur zur Verfügung gestellt werden.

Beispielsweise kann die Schutzschicht ein Material umfassen, welches einerseits als Feuerschutzschild und andererseits die Steifigkeit des Batterieträgerbauteils verbessern kann. Das Material der Schutzschicht kann beispielsweise ebenfalls eine Schutzwirkung gegen die bei einem Thermal Runaway ausgestoßenen Partikel aufweisen.

Beispielsweise kann der Batterieträgerboden ein Material umfassen, welches leicht ist, für einen ausreichenden Schutz gegenüber externen Einflüssen sorgt und zudem die Stabilität des Batterieträgerbauteils verbessert.

Beispielsweise ist der Batterieträgerboden als im Wesentlichen plattenförmiges Teil, insbesondere als Batterieträgerbodenplatte ausgebildet. Es ist ebenfalls denkbar, dass nur ein Teil der Bodenplatte plattenförmig ausgebildet ist und ein weiterer Bereich der Bodenplatte beispielsweise einen auskragenden Bereich und/oder einen abgewinkelten Bereich aufweist.

Vorzugsweise entspricht die Grundfläche der Anbindungsschicht und der Schutzschicht der Grundfläche des Batterieträgerbodens.

Das Schaummaterial kann sowohl als Anbindungs- oder Haftvermittlerschicht zwischen dem zumindest einen Batterieträgerboden und der zumindest einen Schutzschicht als auch als Abstandshalter zur Beabstandung der Batteriezellen dienen. Hierdurch können in fertigungstechnisch günstiger Weise mehrere Funktionen durch ein Bauteil bzw. ein im Wesentlichen zusammenhängendes Material bzw. eine im Wesentlichen zusammenhängende Struktur abgebildet werden. Durch die Verwendung des Schaummaterials kann durch die thermisch isolierenden Eigenschaften des Schaummaterials zudem der thermische Schutz des Batterieträgerbauteils weiter verbessert werden.

Beispielsweise ist das Schaummaterial als eine zusammenhängende Schaumstruktur ausgebildet, wobei die Schaumstruktur sowohl die Anbindungsschicht als auch die Abstandshalter bildet.

Die Anzahl der Löcher der Lochstruktur entspricht vorzugsweise der Anzahl an Abstandshaltern. Beispielsweise sind die Löcher der Lochstruktur im Wesentlichen regelmäßig angeordnet, so dass die sich durch die Löcher der Lochstruktur erstreckenden Abstandshalter in regelmäßigen Abständen Batteriezellen abstützen bzw. aufnehmen können. Beispielsweise weisen die Löcher der Lochstruktur einen im Wesentlichen zylindrischen Querschnitt, insbesondere einen im Wesentlichen kreiszylindrischen Querschnitt, auf.

Die Abstandshalter aus Schaummaterial können ebenfalls in vorteilhafter Weise auf die Batteriezellen einwirkenden Vibration dämpfen. Des Weiteren wird durch die Abstandshalter ein bestimmter Abstand zwischen der Unterseite einer Batteriezelle und der Schutzschicht ermöglicht. Durch einen solchen Abstand kann die im Schadenfall aus einer Batteriezelle austretende Flamme mit Partikelausstoß bereits etwas abgekühlt bzw. abgebremst sowie vorzugsweise zu einem Druckausgleichsventil abgeführt werden, so dass die Schutzschicht diesen besser aufnehmen kann. Zudem wird durch die Beabstandung eine Ventilation bzw. Kühlung der Batteriezellen von unten ermöglicht. Auch weist das Schaummaterial ein vergleichsweise geringes Gewicht im Vergleich zu entsprechenden Strukturen aus Metall und/oder Kunststoff auf. Auf diese Weise kann ein Batterieträgerbauteil zur Verfügung gestellt werden, welches ein geringes Gewicht aufweist und zuverlässig dynamische und statische Belastungen des Fahrzeugs, insbesondere des Batterieträgers, ausgleicht und insbesondere die Batterien vor diesen schützt. Auch eine Temperaturausdehnung der Schutzschicht kann durch das Vorsehen des Schaummaterials, insbesondere durch die elastischen Eigenschaften des Schaummaterials, kompensiert werden.

Insbesondere ist die Schutzschicht als Feuerschutzschicht aus einem Feuerfestmaterial gebildet, wobei das Feuerfestmaterial Temperaturen von kurzzeitig 1300°C, insbesondere von über 1000°C für 2 bis 15 Sekunden, vorzugsweise für 8 bis 10 Sekunden, aushalten kann, wobei sich in diesem Zeitraum zwar eine lokale Verformung oder ein Anschmelzen des Materials einstellen kann, jedoch kein Loch in der Feuerschutzschicht oder in dem Batterieträgerboden entsteht. Die vorgenannte Zeitspanne ist im Schadenfall in etwa die Zeit, in welcher aus einer zerstörten Zelle Hitze bzw. eine Flamme austritt.

Zudem wird durch die erfindungsgemäße Ausgestaltung des Batterieträgerbauteils eine sogenannte "Cell2Pack" Anbindung der Batteriezellen ermöglicht, wodurch der Integrationsgrad der angebundenen Zellen weiter steigt.

Das Batterieträgerbauteil kann beispielsweise als einzelnes Element eines Batterieträgers, beispielsweise als Unterseite eines Batterieträges, oder als mehrere, insbesondere zusammenhängende, Teilelemente eines Batterieträgers ausgestaltet sein.

Anstelle einer oder mehrerer Batteriezellen können auch ein oder mehrere Batteriemodule mit mehreren Batteriezellen, von dem Batterieträgerbauteil aufgenommen werden und/oder an diesem anliegen.

Eine weitere bevorzugte Ausgestaltung ist dadurch gekennzeichnet, dass der Batterieträgerboden einen Metallwerkstoff, vorzugsweise Aluminium, eine Aluminiumlegierung, Stahl oder eine Stahllegierung, und/oder einen Leichtbauwerkstoff, insbesondere faserverstärkten Kunststoff, vorzugsweise glasfaserverstärkten Kunststoff, umfasst, insbesondere aus einem Metallwerkstoff, vorzugweise Aluminium, einer Aluminiumlegierung, Stahl, oder einer Stahllegierung, und/oder aus einem Leichtbauwerkstoff, insbesondere faserverstärktem Kunststoff, vorzugsweise glasfaserverstärktem Kunststoff, besteht. Durch die Verwendung eines Leichtmetallwerkstoffs, insbesondere von Aluminium oder einer Aluminiumlegierung, oder eines Leichtbauwerkstoffs als Material für den Batterieträgerboden kann einerseits eine ausreichende Stabilität sowie ein Schutz gegen Einflüsse von außen, wie beispielsweise Steinschlag, ermöglicht werden und andererseits zudem das Gewicht des Batterieträgerbauteils insgesamt reduziert werden.

Es kann vorgesehen sein, dass die Batterieträgerbodenplatte im Wesentlichen aus einem Verbundwerkstoff besteht, beispielsweise aus einem Verbund von Metall und Kunststoff, insbesondere mit einer Faserverbundstruktur. Auf diese Weise kann Gewicht eingespart und gleichzeitig die Steifigkeit des Batterieträgerbauteils erhöht werden. Es ist ferner bevorzugt, dass der Batterieträgerboden einstückig oder zweistückig ist.

Eine weitere bevorzugte Ausgestaltung ist dadurch gekennzeichnet, dass die Schutzschicht Stahl oder eine Stahllegierung umfasst, insbesondere aus Stahl oder einer Stahllegierung besteht. Hierdurch kann eine feuerfeste Schicht zur Verfügung gestellt werden, die beispielsweise Schutz bei einer Überhitzung bzw. einer Explosion einer Batteriezelle bietet und insbesondere ein Übergreifen auf weitere Batteriezellen möglichst verhindert oder zumindest verzögert.

Eine weitere bevorzugte Ausgestaltung ist dadurch gekennzeichnet, dass das Schaummaterial eine zumindest teilweise zwischen dem Batterieträgerboden und der Schutzschicht angeordnete Anbindungsschicht bildet. Durch das Vorsehen einer Anbindungsschicht kann beispielsweise eine zuverlässige Verbindung zwischen Schutzschicht und Batterieträgerboden vorgesehen werden. Zudem wird durch die Anbindungsschicht eine verbesserte thermische Isolation der Batteriezellen von der Umgebung ermöglicht, was beispielsweise bei kalter Witterung für den Betrieb der Batteriezellen vorteilhaft ist.

Beispielweise erstreckt sich die Anbindungsschicht vollflächig zwischen Batterieträgerboden und Schutzschicht, so dass die Schutzschicht den Batterieträgerboden nicht unmittelbar kontaktiert bzw. kontaktieren kann. Es hat sich alternativ als vorteilhaft herausgestellt, dass sich die Anbindungsschicht beispielsweise nicht vollflächig zwischen Batterieträgerboden und Schutzschicht erstreckt, sondern insbesondere in einem im Wesentlichen unter den Batteriezellen angeordneten Bereich nicht vorhanden ist und/oder eine geringere Dicke als in den restlichen Bereichen aufweist. Hierdurch kann direkt unter den Batteriezellen eine geringere Anhaftung ermöglicht werden, wobei sich das Batterieträgerbauteil in dem Bereich unter den Batteriezellen aufwölben kann und hierdurch im Fall eines Feuers eine verbesserte Isolationswirkung zur Verfügung gestellt werden kann.

Des Weiteren ist bevorzugt, dass die Anbindungsschicht integral mit den Abstandshaltern gebildet ist. Hierdurch kann eine vereinfachte Produktion des Batterieträgerbauteils ermöglicht werden, da keine separaten Klebeverbindungen benötigt werden, um die Abstandshalter mit der Schutzschicht zu verbinden. Zudem wird die Komponentenanzahl des Batterieträgerbauteils reduziert, was sich ebenfalls auf die Gesamtstabilität sowie die Maßhaltigkeit des Batterieträgerbauteils positiv auswirkt. Vorzugsweise sind die Abstandshalter sowie die Anbindungsschicht einstückig aus dem Schaummaterial gebildet.

Eine weitere bevorzugte Ausgestaltung ist dadurch gekennzeichnet, dass die Anbindungsschicht eine Dicke zwischen 1 mm und 5 mm aufweist. Naturgemäß können in Abhängigkeit der Größe des Batterieträgerbauteils bzw. des Batterieträgers auch andere Dicken zweckmäßig sein.

Eine weitere bevorzugte Ausgestaltung ist dadurch gekennzeichnet, dass das Schaummaterial expandiertes Polypropylen (EPP), expandiertes Polyurethan (PU), Polyamid (PA) und/oder expandiertes Polyethylen (EPE, vernetzt oder unvernetzt) umfasst, insbesondere aus expandiertem Polypropylen (EPP), expandiertes Polyurethan (PU), Polyamid (PA) und/oder expandiertem Polyethylen (EPE, vernetzt oder unvernetzt) besteht. Hierdurch kann beispielsweise ein Schaummaterial mit guter thermischer Isolation und vorteilhaften mechanischen Eigenschaften bei gleichzeitig niedrigem Gewicht ermöglicht werden. Zudem kann vorzugsweise eine zuverlässige Anbindung zwischen Batterieträgerboden und Schutzschicht ermöglicht werden. Beispielsweise kann es sich bei dem Schaummaterial auch um Metallschaum, insbesondere um Aluminiumschaum handeln.

Eine weitere bevorzugte Ausgestaltung ist dadurch gekennzeichnet, dass unterschiedliches Schaummaterial in unterschiedlichen Bereichen des Batterieträgerbauteils verwendet wird und/oder dass das Schaummaterial einen Mehrzonenschaum mit unterschiedlichen Eigenschaften bildet. Beispielsweise kann das für die Anbindungsschicht und/oder für die Abstandshalter verwendete Schaummaterial eine geringere Dichte aufweise als in einem Rahmenbereich des Batterieträgerbauteils eingebrachtes Schaummaterial. Hierdurch können für die Anbindungsschicht und/oder für die Abstandshalter vorteilhafte Eigenschaften hinsichtlich der thermischen Isolation ermöglicht werden, wohingegen das in einem Rahmenbereich eingebrachte Schaummaterial in vorteilhafter Weise Kräfte aufnehmen kann und hierdurch als Crash-Absorber wirken kann. Des Weiteren kann es bevorzugt sein, dass das für die Abstandshalter verwendete Schaummaterial eine geringere Dichte aufweist als das für die Anbindungsschicht verwendete Schaummaterial. Hierdurch kann auch die Anbindungsschicht in vorteilhafter Weise als Crash-Absorber wirken und die Batteriezellen mechanisch schützen.

Eine weitere bevorzugte Ausgestaltung ist dadurch gekennzeichnet, dass die Abstandshalter zylindrisch, insbesondere kreiszylindrisch, ausgebildet sind. Eine derartige Ausgestaltung ermöglicht in zuverlässiger Weise eine Beabstandung der Batteriezellen von der Schutzschicht, wobei zwischen den Abstandshaltern Platz zur Ventilation der Batteriezellen vorgesehen werden kann.

Des Weiteren ist es bevorzugt, dass die Abstandshalter an ihren Stirnseiten eine vorzugsweise im Wesentlichen flache Abstützfläche für die Batteriezellen aufweisen. Eine solche flache Abstützfläche kann einen zuverlässigen Halt für die Batteriezellen ermöglichen. Vorzugsweise ist eine Batteriezelle an einer Mehrzahl von Abstandshaltern bzw. an einer Mehrzahl von Abstützflächen abgestützt. Die Batteriezellen können unmittelbar oder mittelbar auf der Abstützfläche angeordnet sein. Die Abstützfläche kann alternativ auch Prägungen und/oder schräge bzw. abgewinkelte Bereiche zur Zentrierung und/oder zum Abstützen der Batteriezellen aufweisen.

Eine weitere bevorzugte Ausgestaltung ist dadurch gekennzeichnet, dass die Abstandshalter derart zueinander beabstandet sind, dass ein zusammenhängendes Entlüftungsvolumen, insbesondere zwischen den Abstandshaltern, entsteht. Insbesondere ist es bevorzugt, dass ein Abstandshalter jeweils zu allen anderen Abstandshaltern beabstandet ist. Hierdurch entsteht ein zusammenhängendes Entlüftungsvolumen, wodurch keine separaten und dedizierten Entlüftungskanäle vorgesehen werden müssen. Zudem kann eine vorteilhafte Entlüftung, insbesondere im Überhitzungsfall einer Batteriezelle, ermöglicht werden, da die entstehende Hitze in alle Richtung abgeführt werden kann. Dies kann dazu beitragen, dass eine sogenannte thermal propagation, also ein Übergriff des thermal runways auf weitere Batteriezellen vermieden wird. Zudem kann durch eine Verbesserung der Entlüftung der Höhenaufbau des gesamten Batterieträgerbauteils reduziert werden, wodurch einerseits mehr Platz für Batteriezellen geschaffen wird und andererseits das Gesamtgewicht des Batterieträgerbauteils reduziert werden kann. Durch den Entfall von Verbindungselementen zwischen den Abstandshaltern kann zudem die volumetrische Ausnutzung des Entlüftungsvolumens verbessert werden, wodurch die Möglichkeit besteht, die Höhe der Abstandshalter und somit den genutzten Bauraum zu reduzieren.

Eine weitere bevorzugte Ausgestaltung ist dadurch gekennzeichnet, dass zumindest drei Abstandshalter, vorzugsweise sechs Abstandshalter, eine Batteriezelle aufnehmen. Hierdurch kann eine ausreichend stabile Abstützung bzw. Aufnahme für eine jeweilige Batteriezelle ermöglicht werden. Insbesondere sind die Batteriezellen auf den Abstützflächen der Abstandshalter angeordnet. Es ist weiter bevorzugt, dass ein Abstandshalter eine Mehrzahl an Batteriezellen, insbesondere zumindest zwei Batteriezellen, abstützen kann. Des Weiteren ist es bevorzugt, dass die Abstandshalter in einer Wabenstruktur angeordnet sind, wobei eine Batteriezelle von jeweils sechs Abstandshaltern beabstandet bzw. aufgenommen wird. Beispielsweise können die einer Batteriezelle zugeordneten Abstandshalter diese im Wesentlichen kreisförmig umgeben.

Eine weitere bevorzugte Ausgestaltung ist dadurch gekennzeichnet, dass die Innenkontur der Löcher der Lochstruktur im Wesentlichen zu der Außenkontur der Abstandshalter korrespondiert, insbesondere zu dieser konzentrisch ist. Hierdurch kann eine im Wesentlichen vollständige Abschirmung der Batteriezellen durch die Schutzschicht ermöglicht werden. Beispielsweise liegt das Schaummaterial bzw. die Außenkontur der Abstandshalter an der Innenkontur der Löcher der Lochstruktur der Schutzschicht an. In anderen Worten sind die Löcher der Lochstruktur der Schutzschicht vorzugweise vollständig von dem Schaummaterial bzw. den Abstandshaltern ausgefüllt.

Beispielsweise ist der Außendurchmesser der Abstandshalter größer als der Innendurchmesser der Löcher der Lochstruktur. Hierdurch kann eine ausreichende Stabilität der Abstandshalter ermöglicht werden.

Eine weitere bevorzugte Ausgestaltung ist dadurch gekennzeichnet, dass der Batterieträgerboden eine Dicke zwischen 0,5 mm und 7 mm, insbesondere eine Dicke zwischen 2 mm und 6 mm aufweist. Es hat sich gezeigt, dass die vorgenannten Dickenbereiche für eine ausreichende Stabilität und einen ausreichenden Schutz gegenüber externen Einflüssen sorgen. Insbesondere eine Dicke zwischen 2 mm und 6 mm hat sich als besonders bevorzugt herausgestellt. Naturgemäß können in Abhängigkeit der Größe des Batterieträgerbauteils bzw. des Batterieträgers auch andere Dicken zweckmäßig sein.

Eine weitere bevorzugte Ausgestaltung ist dadurch gekennzeichnet, dass die Schutzschicht eine Dicke zwischen 0,2 mm und 2 mm, insbesondere zwischen 0,3 mm und 1,5 mm aufweist. Es hat sich gezeigt, dass die vorgenannten Dickenbereiche einen ausreichenden Schutz gegenüber den aus einer Batteriezelle austretenden Partikeln bzw. der austretenden Hitze aufweisen. Naturgemäß können in Abhängigkeit der Größe des Batterieträgerbauteils bzw. des Batterieträgers oder in Abhängigkeit der verwendeten Batteriezellen auch andere Dicken zweckmäßig sein.

Eine weitere bevorzugte Ausgestaltung ist dadurch gekennzeichnet, dass die Abstandshalter eine längliche Erstreckung von der Schutzschicht bis zu einer von der Schutzschicht abgewandten Stirnseite zwischen 5 mm und 50 mm, bevorzugt zwischen 10 mm und 30 mm aufweisen. Durch eine entsprechende Beabstandung der Batteriezellen von der Schutzschicht kann eine vorteilhafte Ventilation der aufgenommenen Batteriezellen ermöglicht werden. Insbesondere hat sich eine längliche Erstreckung der Abstandshalter zwischen 10 mm und 30 mm als besonders bevorzugt herausgestellt. Vorzugsweise weisen alle Abstandshalter im Wesentlichen dieselbe längliche Erstreckung auf. Insbesondere verläuft die längliche Erstreckung der Abstandshalter in Dickenrichtung des Batterieträgerbauteils. Vorzugsweise wird die längliche Erstreckung der Abstandshalter von der Oberseite der Schutzschicht bis zur Stirnseite der Abstandshalter gemessen. Alternativ kann die längliche Erstreckung auch von dem oberen Ende der Anbindungsschicht bis zur Stirnseite der Abstandshalter gemessen werden.

Eine weitere bevorzugte Ausgestaltung ist dadurch gekennzeichnet, dass die Schutzschicht den Batteriezellen zugeordnete Bereiche aufweist, wobei die den Batteriezellen zugeordneten Bereiche zumindest eine Erhebung, zumindest eine Vertiefung und/oder zumindest eine Sollbruchstelle aufweisen. Dies kann insbesondere bezüglich einer verbesserten Feuerabfuhr vorteilhaft sein. Die den Batteriezellen zugeordneten Bereiche der Schutzschicht sind insbesondere diejenigen Bereiche, welche im Wesentlichen vertikal unter den Batteriezellen angeordnet sind und beispielsweise in vertikaler Richtung mit den Batteriezellen fluchten.

Eine weitere bevorzugte Ausgestaltung ist dadurch gekennzeichnet, dass die den Batteriezellen zugeordneten Bereiche der Schutzschicht derart mit dem Schaummaterial, insbesondere derart mit der Anbindungsschicht, verbunden sind, dass die den Batteriezellen zugeordneten Bereiche der Schutzschicht eine geringe Anhaftung oder keine Anhaftung mit dem Schaummaterial, insbesondere mit der Anbindungsschicht, aufweisen. Hierdurch kann ermöglicht werden, dass sich im Falle eines Feuers einer Batteriezelle das Batterieträgerbauteil im Bereich der jeweiligen Zelle ausbeult und daher eine Lufttasche für eine zusätzliche Isolationswirkung entsteht.

Eine weitere bevorzugte Ausgestaltung ist dadurch gekennzeichnet, dass das Schaummaterial und/oder die Anbindungsschicht derart mit dem Batterieträgerboden und/oder derart mit der Schutzschicht verbunden sind, dass sich im Falle eines Feuers ein Luftspalt zwischen dem Schaummaterial und/oder der Anbindungsschicht und dem Batterieträgerboden bzw. der Schutzschicht einstellt, welcher für eine verbesserte Isolationswirkung sorgt. Es ist bevorzugt, dass sich ein Luftspalt insbesondere in einem Bereich einer Batteriezelle einstellt, die ein Feuer verursacht. Beispielsweise ist das Schaummaterial und/oder die Anbindungsschicht nur partiell mit dem Batterieträgerboden oder der Schutzschicht verbunden und insbesondere in einem Bereich unter einer Batteriezelle nicht oder nur partiell mit dem Batterieträgerboden oder der Schutzschicht verbunden. Beispielsweise wird eine verringerte Anhaftung des Schaummaterials und/oder der Anbindungsschicht durch eine entsprechende Vorbehandlung der Schutzschicht und/oder des Batterieträgerbodens ermöglicht.

Eine weitere bevorzugte Ausgestaltung ist dadurch gekennzeichnet, dass das Schaummaterial, insbesondere die Anbindungsschicht, zumindest teilweise integrierte Funktionselemente des Batterieträgerbauteils aufweist. Dies ist insbesondere in fertigungstechnischer Hinsicht vorteilhaft. Beispielsweise kann es sich bei den Funktionselementen um überschäumte Gewindebuchsen handeln, die als Befestigungsmöglichkeit für Elektronik oder für einen Deckel des Batterieträgerbauteils dienen. Beispielsweise kann es sich bei den Funktionselementen um Kühlkanäle handeln, die eine Kühlung der in dem Batterieträgerbauteil anzuordnenden Batteriezellen ermöglichen.

Eine weitere bevorzugte Ausgestaltung ist dadurch gekennzeichnet, dass das Batterieträgerbauteil zwischen der Schutzschicht und dem Schaummaterial, insbesondere zwischen der Schutzschicht und der Anbindungsschicht unter Hitze expandierendes Material aufweist. Insbesondere ist das unter Hitze expandierende Material in den den Batteriezellen zugeordneten Bereichen angeordnet. Vorzugsweise wird das unter Hitze expandierende Material auf die den Batteriezellen abgewandte Seite der Schutzschicht appliziert. Hierdurch kann ein vorteilhaftes Ausbeulen des Batterieträgers, insbesondere ein vorteilhaftes lokales Ausbeulen des Batterieträgers, im Falle eines thermal runaways ermöglich werden, ohne dass das Batterieträgerbauteil im üblichen Einsatzzustand eine zusätzliche Höhe benötigt. Beispielsweise kann es sich bei dem unter Hitze expandierenden Material um intumeszentes Material handeln.

Vorgenannte Aufgabe wird gemäß einem zweiten Aspekt der vorliegenden Erfindung gelöst durch einen Batterieträger zur Aufnahme von als Antriebsenergiespeicher für ein elektrisch angetriebenes Fahrzeug dienenden Batteriezellen, wobei der Batterieträger mit einer Rohkarosserie des Fahrzeugs verbindbar ist, und wobei der Batterieträger ein vorgenanntes Batterieträgerbauteil umfasst. Hierdurch kann ein Batterieträger zur Verfügung gestellt werden, welcher die zuvor beschriebenen Vorteile des Batterieträgerbauteils ebenfalls aufweist.

Vorgenannte Aufgabe wird gemäß einem dritten Aspekt der vorliegenden Erfindung gelöst durch ein Verfahren zur Herstellung eines Batterieträgerbauteils, insbesondere eines vorgenannten Batterieträgerbauteils, oder eines Batterieträgers, insbesondere eines vorgenannten Batterieträgers, umfassend die Schritte: Bereitstellen von zumindest einem, insbesondere im Wesentlichen plattenförmigen, Batterieträgerboden sowie von zumindest einer, insbesondere im Wesentlichen plattenförmigen, eine Lochstruktur aufweisende Schutzschicht, Anordnen des zumindest einen Batterieträgerbodens in einer ersten Werkzeughälfte sowie der zumindest einen Schutzschicht in einer zweiten Werkzeughälfte, Aufbringen von Schaummaterial auf den zumindest einen Batterieträgerboden, Schließen der beiden Werkzeughälften, Expandieren des Schaummaterials durch die Lochstruktur der Schutzschicht in Aussparungen der zweiten Werkzeughälfte zur Bildung von sich durch die Lochstruktur erstreckenden Abstandshaltern, Aushärten des Schaummaterials, Öffnen der beiden Werkzeughälften und Auswerfen des Batterieträgerbauteils.

Hierdurch kann in fertigungstechnisch günstiger Weise ein zuvor bereits beschriebenes Batterieträgerbauteil bzw. ein zuvor bereits beschriebener Batterieträger zur Verfügung gestellt werden.

Vorzugsweise handelt es sich bei der ersten Werkzeughälfte um eine untere Werkzeughälfte und bei der zweiten Werkzeughälfte um eine obere Werkzeughälfte.

Beispielsweise weist die erste Werkzeughälfte und/oder die zweite Werkzeughälfte, insbesondere Formteile der zweiten Werkzeughälfte, eine geringe Anhaftung auf und/oder die erste Werkzeughälfte und/oder die zweite Werkzeughälfte, insbesondere Formteile der zweiten Werkzeughälfte, sind mit einem Trennmittel vorbehandelt.

Vorzugsweise kann der Schritt des Auswerfens auch ein passives Auswerfen des Batterieträgerbauteils umfassen, so dass das Batterieträgerbauteil von einem externen Aktor, wie beispielsweise einem Roboter, entnommen werden kann.

Nach dem Schritt des Auswerfens kann sich eine Reinigung der zumindest einen ersten Werkzeughälfte und/oder der zumindest einen zweiten Werkzeughälfte anschließen, wobei die Werkzeughälften insbesondere von dem Schaummaterial und/oder von einem potenziell verwendeten Trennmittel gereinigt werden können.

Beispielsweise kann der zumindest eine Batterieträgerboden und/oder die zumindest eine Schutzschicht vorbehandelt werden, insbesondere mit einer Grundierung. Eine solche Grundierung kann beispielweise die Anhaftung des Schaummaterials an dem Batterieträgerboden und/oder der Schutzschicht verbessern.

Vorzugsweise bleiben die beiden Werkzeughälften während des Schrittes des Expandierens und des Aushärtens des Schaummaterials geschlossen. Hierzu werden die beiden Werkzeughälften vorzugsweise mit einer ausreichenden Klemmkraft zusammengehalten. Bevorzugt werden die beiden Werkzeughälften während des Schrittes des Expandierens und des Aushärtens des Schaummaterials formschlüssig verriegelt.

Beispielsweise kann der Schritt des Expandierens des Schaummaterials und der Schritt des Aushärtens des Schaummaterials zumindest teilweise zeitgleich erfolgen.

Vorzugsweise handelt es sich bei dem Schaummaterial um ein Mehrkomponentensystem, insbesondere um ein Zweikomponentensystem, welches unmittelbar vor dem Aufbringen des Schaummaterials auf den zumindest einen Batterieträgerboden und/oder die zumindest eine Schutzschicht gemischt wird. Hierdurch kann eine chemische Reaktion des Schaummaterials bei geschlossenen Werkzeughälften ermöglicht werden, wodurch sich die im Zusammenhang mit dem Batterieträgerbauteil genannten vorteilhaften Eigenschaften einstellen können.

Vorzugsweise wird der Batterieträgerboden und/oder die Schutzschicht mittels einer Mehrzahl an Magneten an der ersten Werkzeughälfte bzw. an der zweiten Werkzeughälfte angeordnet und an dieser gesichert. Vorzugsweise handelt es sich bei der Mehrzahl von Magneten um schaltbare, insbesondere elektrisch schaltbare, Magneten.

Vorzugsweise kann der Batterieträgerboden und/oder die Schutzschicht alternativ und/oder zusätzlich mit zumindest einem Vakuumsauger an der ersten Werkzeughälfte bzw. an der zweiten Werkzeughälfte angeordnet und an dieser gesichert werden. Der zumindest eine Vakuumsauger kann zur Verfügungstellung des benötigten Vakuums bzw. Unterdrucks bspw. mit einer Vakuumleitung, mit einer pneumatischen Leitung und/oder mit zumindest einer Venturidüse verbunden sein.

Des Weiteren ist es bevorzugt, dass die Aussparungen der zweiten Werkzeughälfte zur Bildung von sich durch die Lochstruktur erstreckenden Abstandshaltern Entformschrägen aufweisen und sich vorzugsweise im Wesentlichen konisch verjüngen. Dies kann ein vereinfachtes Auswerfen des Batterieträgerbauteils ermöglichen.

Der Schritt des Aufbringens von Schaummaterial auf den zumindest einen Batterieträgerboden und/oder die zumindest eine Schutzschicht erfolgt insbesondere im offenen Zustand der beiden Werkzeughälften. Anschließend können die beiden Werkzeughälften geschlossen werden.

Alternativ kann der Schritt des Aufbringens von Schaummaterial auch bei geschlossenen Werkzeughälften durchgeführt werden, indem das Schaummaterial in einen durch beide geschlossene Werkzeughälften gebildeten Innenraum injiziert wird.

Eine weitere Ausgestaltung ist dadurch gekennzeichnet, dass der zumindest eine Batterieträgerboden und die zumindest eine Schutzschicht derart in der ersten Werkzeughälfte und der zweiten Werkzeughälfte angeordnet werden, dass Batterieträgerboden und Schutzschicht im geschlossenen Zustand der beiden Werkzeughälften zueinander beabstandet sind. Insbesondere weisen Batterieträgerboden und Schutzschicht im geschlossenen Zustand der beiden Werkzeughälften einen Abstand von 1 mm bis 5 mm zueinander auf. Der Abstand entspricht vorzugsweise der Dicke der Anbindungsschicht. Hierdurch lässt sich in zuverlässiger Weise eine Anbindungsschicht zwischen dem Batterieträgerboden und der Schutzschicht vorsehen.

Eine weitere bevorzugte Ausgestaltung ist dadurch gekennzeichnet, dass ein durch die beiden Werkzeughälften im geschlossenen Zustand gebildeter Innenraum belüftet wird. Beispielsweise weist die erste Werkzeughälfte und/oder die zweite Werkzeughälfte Belüftungslöcher hierzu auf. Eine entsprechende Belüftung ermöglicht ein zuverlässiges Expandieren und Aushärten des Schaummaterials.

Eine weitere bevorzugte Ausgestaltung ist dadurch gekennzeichnet, dass das Batterieträgerbauteil mittels einer Mehrzahl an Auswerferelementen ausgeworfen wird. Die Auswerferelemente können beispielsweise als Auswerferpins ausgebildet werden, die insbesondere pneumatisch, elektrisch und/oder hydraulisch angesteuert werden können. Insbesondere ein pneumatisches Ansteuern hat sich hinsichtlich der Verfügbarkeit beispielsweise von Druckluft als vorteilhaft erwiesen. Es ist bevorzugt, dass die Auswerferpins während des Auswerfens derart angesteuert werden, dass das Batterieträgerbauteil und insbesondere die Abstandshalter während des Auswerfens nicht beschädigt werden.

Es ist bevorzugt, dass eine Mehrzahl an Auswerferelementen, insbesondere an Auswerferpins, an einer Auswerferplatte ausgebildet ist, wobei die Auswerferplatte die Auswerferelemente im Wesentlichen gleichmäßig verfahren kann. Beispielsweise ist die Auswerferplatte hierzu pneumatisch ansteuerbar.

Es ist bevorzugt, dass die Auswerferelemente und insbesondere die Auswerferplatte in der zweiten Werkzeughälfte, also in der oberen Werkzeughälfte, angeordnet sind. Des Weiteren ist es bevorzugt, dass Auswerferelemente zusätzlich in der ersten Werkzeughälfte, also in der unteren Werkzeughälfte, angeordnet sind. Vorzugsweise sind die Auswerferelemente im Wesentlichen gleichmäßig in der ersten Werkzeughälfte und/oder in der zweiten Werkzeughälfte verteilt.

Eine weitere bevorzugte Ausgestaltung ist dadurch gekennzeichnet, dass die Auswerferelemente jeweils einem Abstandshalter des Batterieträgerbauteils zugeordnet sind. Beispielsweise drücken die Auswerferelemente jeweils gegen einen Abstandshalter, wodurch ein Auswerfen des Batterieträgerbauteils in zuverlässiger Weise ermöglicht werden kann.

Eine bevorzugte Ausgestaltung ist dadurch gekennzeichnet, dass die erste Werkzeughälfte und/oder die zweite Werkzeughälfte Polytetrafluorethylen, Stahl, eine Stahllegierung, Aluminium oder eine Aluminiumlegierung umfassen, insbesondere aus Polytetrafluorethylen, Stahl, einer Stahllegierung, Aluminium oder einer Aluminiumlegierung bestehen. Insbesondere Aluminium oder eine Aluminiumlegierung hat sich hinsichtlich einer Temperierung der beiden Werkzeughälften als vorteilhaft erwiesen. Beispielsweise können die erste Werkzeughälfte und/oder die zweite Werkzeughälfte eine haftungsmindernde Beschichtung aufweisen und/oder die erste Werkzeughälfte und/oder die zweite Werkzeughälfte werden mit Trennmittel besprüht.

Die oben beschriebenen, zunächst grundsätzlich für sich alleinstehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine Draufsicht eines Ausführungsbeispiel eines Batterieträgers in einer schematischen Darstellung;
- Fig. 2: eine perspektivische Schnittansicht eines Ausführungsbeispiels eines Batterieträgerbauteils;
- Fig. 3: eine schematische Schnittansicht eines Details eines Batterieträgerbauteils mit Batteriezellen, und
- Fig. 4: ein Flow-Chart eines Ausführungsbeispiels eines Verfahrens zur Herstellung eines Batterieträgerbauteils.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

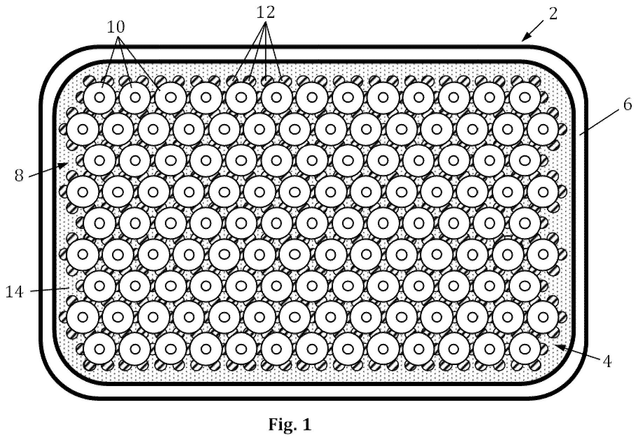

Fig. 1 zeigt eine Draufsicht eines Ausführungsbeispiels eines Batterieträgers 2 in einer schematischen Darstellung. Der Batterieträger 2 weist ein Batterieträgerbauteil 4 als Batterieträgerwanne sowie einen das Batterieträgerbauteil 4 umgebenden Rahmen 6 auf.

In einem Aufnahmebereich 8 des Batterieträgers 2 sind eine Vielzahl an Batteriezellen 10 auf Abstandshaltern 12 angeordnet. Unterhalb der Batteriezellen 10 beabstandet durch die Abstandshalter 12 ist eine Schutzschicht 14 angeordnet.

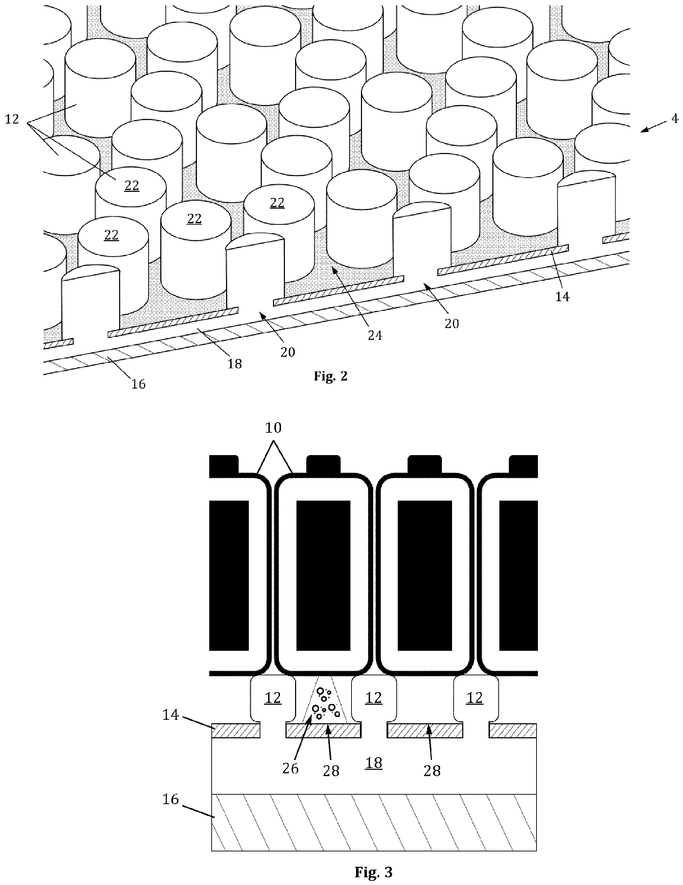

Weitere Details hinsichtlich des Aufbaus des Batterieträgerbauteil 4 lassen sich den Fig. 2 und 3 entnehmen.

Fig. 2 zeigt eine perspektivische Schnittansicht eines Ausführungsbeispiels eines Batterieträgerbauteils 4.

Das Batterieträgerbauteil 4 weist einen Batterieträgerboden 16 sowie eine mittels einer Anbindungsschicht 18 aus Schaummaterial mit dem Batterieträgerboden 16 verbundene Schutzschicht 14 auf. Die Anbindungsschicht 18 ist durch eine Lochstruktur umfassend eine Mehrzahl an Löchern 20 integral mit den Abstandshaltern 12 verbunden. Der Batterieträgerboden 16 ist beispielsweise als Batterieträgerbodenplatte 16 ausgebildet.

Die Abstandshalter 12 sind im Wesentlichen kreiszylindrisch ausgebildet und weisen an ihren Stirnseiten eine im Wesentlichen flache Abstützfläche 22 für die Batteriezellen auf.

Die Abstandshalter 12 sind jeweils zu den benachbarten Abstandshaltern 12 beabstandet, so dass ein zusammenhängendes Entlüftungsvolumen 24 zwischen den Abstandshaltern 12, der Schutzschicht 14 und den Batteriezellen 10 gebildet wird.

Es ist erkennbar, dass die Abstandshalter 12 im Wesentlichen wabenförmig angeordnet sind, so dass die Abstützflächen 22 von sechs Abstandshaltern 12 eine Batteriezelle 10 abstützen bzw. aufnehmen.

Die Innenkontur der Löcher 20 der Lochstruktur weist einen geringeren Durchmesser auf als die Außenkontur der im Wesentlichen zylindrischen Abstandshalter 12.

Fig. 3 zeigt eine schematische Schnittansicht eines Details eines Batterieträgerbauteils 4 mit aufgenommenen Batteriezellen 10. Es ist erkennbar, dass aus einer Batteriezelle 10 Partikel 26, wie beispielsweise Elektrolyte austreten, welche von der Schutzschicht 14 aufgenommen werden. Zweckmäßigerweise besteht die Schutzschicht 13 aus einem Feuerfestmaterial, um dem Austritt der heißen Partikel 26 standzuhalten. Hierdurch kann die Gefahr einer thermal propagation reduziert bzw. eine solche vermieden werden. Der Bereich der Schutzschicht 14, welcher einem Austritt der heißen Partikel 26 standhalten soll, kann als ein der jeweiligen Batteriezelle 10 zugeordneter Bereich 28 der Schutzschicht 14 angesehen werden.

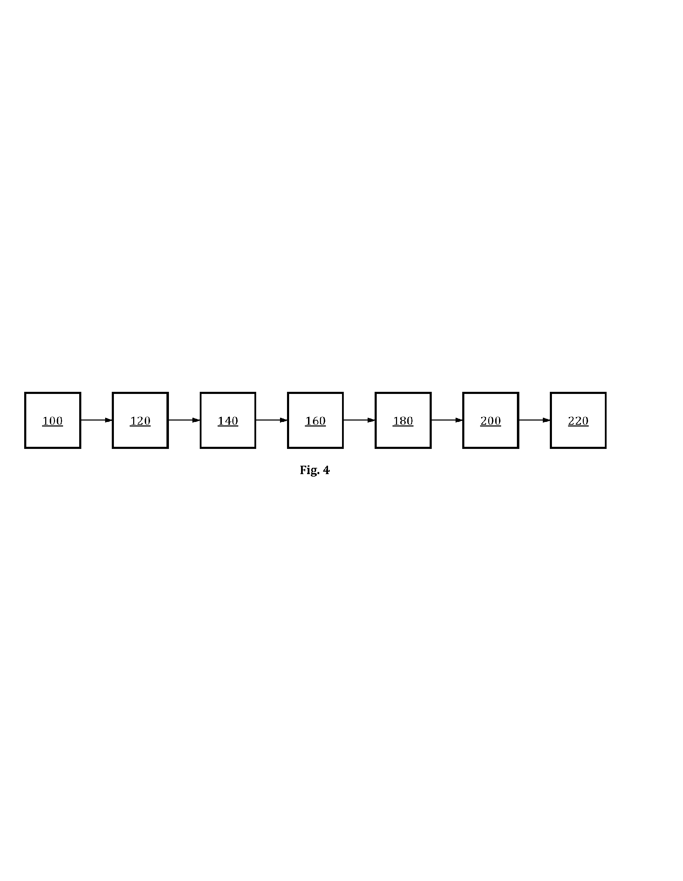

Fig. 4 zeigt ein Flow-Chart eines Ausführungsbeispiels eines Verfahrens zur Herstellung eines Batterieträgerbauteils 4.

In einem ersten Schritt 100 wird ein im Wesentlichen plattenförmiger, Batterieträgerboden 16 sowie eine im Wesentlichen plattenförmige und eine Lochstruktur aufweisende Schutzschicht 14 bereitgestellt.

Anschließend kann in einem optionalen Schritt ein Trennmittelauftrag auf die erste Werkzeughälfte und/oder die zweite Werkzeughälfte, insbesondere auf Formteile der zweiten Werkzeughälfte, erfolgen.

In einem nächsten Schritt 120 wird der Batterieträgerboden 16 in einer ersten Werkzeughälfte und die zumindest eine Schutzschicht 14 in einer zweiten Werkzeughälfte angeordnet.

In einem weiteren Schritt 140 wird Schaummaterial auf den zumindest einen Batterieträgerboden 16 aufgebracht.

In einem nächsten Schritt 160 werden die beiden Werkzeughälften geschlossen.

In einem weiteren Schritt 180 expandiert das Schaummaterial durch die Lochstruktur der Schutzschicht 14 in Aussparungen der zweiten Werkzeughälfte zur Bildung von sich durch die Lochstruktur erstreckenden Abstandshaltern 12.

In einem nächsten Schritt 200 härtet das Schaummaterial aus. Der Schritt 200 kann zumindest teilweise parallel zu dem Schritt 180 stattfinden.

In einem weiteren Schritt 220 werden die beiden Werkzeughälften geöffnet und das Batterieträgerbauteil 4 wird ausgeworfen.

Abschließend können die beiden Werkzeughälften, falls notwendig, von dem Schaummaterial und/oder von dem Trennmittel gereinigt werden.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Batterieträger
- 4: Batterieträgerbauteil
- 6: Rahmen des Batterieträgers
- 8: Aufnahmebereich des Batterieträgers
- 10: Batteriezelle
- 12: Abstandshalter
- 14: Schutzschicht
- 16: Batterieträgerboden
- 18: Anbindungsschicht
- 20: Loch der Lochstruktur
- 22: Abstützfläche
- 24: Entlüftungsvolumen
- 26: Partikel
- 28: Batteriezellen zugeordnete Bereiche der Schutzschicht
- 100: Bereitstellen von Batterieträgerboden und Schutzschicht
- 120: Anordnen von Batterieträgerboden und Schutzschicht in den Werkzeughälften
- 140: Aufbringen von Schaummaterial
- 160: Schließen der beiden Werkzeughälften
- 180: Expandieren des Schaummaterial
- 200: Aushärten des Schaummaterials
- 220: Öffnen der beiden Werkzeughälften und Auswerfen des Batterieträgerbauteils

## Patentansprüche

1. Batterieträgerbauteil, insbesondere Batterieträgerwanne, zur zumindest teilweisen Aufnahme von als Antriebsenergiespeicher für ein elektrisch angetriebenes Fahrzeug dienenden Batteriezellen (10), umfassend:
- zumindest einen Batterieträgerboden (16), insbesondere eine Batterieträgerbodenplatte, sowie
- zumindest eine mittels eines Schaummaterials mit dem Batterieträgerboden (16) verbundene Schutzschicht (14), insbesondere Feuerschutzschicht,
**dadurch gekennzeichnet**
- **dass** die Schutzschicht (14) eine Lochstruktur aufweist,
- **dass** das Schaummaterial sich zumindest teilweise durch die Lochstruktur erstreckende Abstandshalter (12) zur Beabstandung der Batteriezellen (10) von der Schutzschicht (14) aufweist.

2. Batterieträgerbauteil nach Anspruch 1,
- wobei der Batterieträgerboden (16) einen Metallwerkstoff, vorzugsweise Aluminium, eine Aluminiumlegierung, Stahl oder eine Stahllegierung, und/oder einen Leichtbauwerkstoff, insbesondere faserverstärkten Kunststoff, vorzugsweise glasfaserverstärkten Kunststoff, umfasst, insbesondere aus einem Metallwerkstoff, vorzugweise Aluminium, einer Aluminiumlegierung, Stahl, oder einer Stahllegierung, und/oder aus einem Leichtbauwerkstoff, insbesondere faserverstärktem Kunststoff, vorzugsweise glasfaserverstärktem Kunststoff, besteht,
- wobei die Schutzschicht (14) Stahl oder eine Stahllegierung umfasst, insbesondere aus Stahl oder einer Stahllegierung besteht.

3. Batterieträgerbauteil nach Anspruch 1 oder 2,
- wobei das Schaummaterial eine zumindest teilweise zwischen dem Batterieträgerboden (16) und der Schutzschicht (14) angeordnete Anbindungsschicht (18) bildet,
- wobei die Anbindungsschicht (18) integral mit den Abstandshaltern (12) gebildet ist, und
- wobei die Anbindungsschicht (18) insbesondere eine Dicke zwischen 1 mm und 5 mm aufweist.

4. Batterieträgerbauteil nach einem der Ansprüche 1 bis 5,
- wobei das Schaummaterial expandiertes Polypropylen (EPP), expandiertes Polyurethan (PU), Polyamid (PA) und/oder expandiertes Polyethylen (EPE, vernetzt oder unvernetzt) umfasst, insbesondere aus expandiertem Polypropylen (EPP), expandiertem Polyurethan (PU), Polyamid (PA) und/oder expandiertem Polyethylen (EPE, vernetzt oder unvernetzt) besteht.

5. Batterieträgerbauteil nach einem der Ansprüche 1 bis 4,
- wobei die Abstandshalter (12) zylindrisch, insbesondere kreiszylindrisch, ausgebildet sind, und/oder
- wobei die Abstandshalter (12) an ihren Stirnseiten eine im Wesentlichen flache Abstützfläche (22) für die Batteriezellen aufweisen.

6. Batterieträgerbauteil nach einem der Ansprüche 1 bis 5,
- wobei die Abstandshalter (12) derart zueinander beabstandet sind, dass ein zusammenhängendes Entlüftungsvolumen (24), insbesondere zwischen den Abstandshaltern (12), für das Batterieträgerbauteil (4) entsteht, und/oder
- wobei zumindest drei Abstandshalter (12), vorzugsweise sechs Abstandshalter (12), eine Batteriezelle aufnehmen.

7. Batterieträgerbauteil nach einem der Ansprüche 1 bis 6,
- wobei die Innenkontur der Löcher (20) der Lochstruktur im Wesentlichen zu der Außenkontur der Abstandshalter (12) korrespondiert, insbesondere zu dieser konzentrisch ist.

8. Batterieträgerbauteil nach einem der Ansprüche 1 bis 7,
- wobei der Batterieträgerboden (16) eine Dicke zwischen 0,5 mm und 7 mm, insbesondere eine Dicke zwischen 2 mm und 6 mm aufweist, und/oder
- wobei die Schutzschicht (14) eine Dicke zwischen 0,2 mm und 2 mm, insbesondere zwischen 0,4 mm und 1 mm aufweist.

9. Batterieträgerbauteil nach einem der Ansprüche 1 bis 8,
- wobei die Abstandshalter (12) eine längliche Erstreckung von der Schutzschicht bis zu ihrer von der Schutzschicht abgewandten Stirnseite zwischen 5 mm und 50 mm, bevorzugt zwischen 10 mm und 30 mm aufweisen.

10. Batterieträgerbauteil nach einem der Ansprüche 1 bis 9,
- wobei die Schutzschicht (14) den Batteriezellen (10) zugeordnete Bereiche (28) aufweist, wobei die den Batteriezellen (10) zugeordneten Bereiche (28) insbesondere zumindest eine Erhebung, zumindest eine Vertiefung und/oder zumindest eine Sollbruchstelle aufweisen.

11. Batterieträgerbauteil nach Anspruch 10,
- wobei die den Batteriezellen (10) zugeordneten Bereiche (28) der Schutzschicht (14) derart mit dem Schaummaterial, insbesondere derart mit der Anbindungsschicht (18), verbunden sind, dass die den Batteriezellen (10) zugeordneten Bereiche (28) der Schutzschicht (14) eine geringe Anhaftung oder keine Anhaftung mit dem Schaummaterial, insbesondere mit der Anbindungsschicht (18), aufweisen.

12. Batterieträger zur Aufnahme von als Antriebsenergiespeicher für ein elektrisch angetriebenes Fahrzeug dienenden Batteriezellen (10),
- wobei der Batterieträger (2) mit einer Rohkarosserie des Fahrzeugs verbindbar ist, und
- wobei der Batterieträger (2) ein Batterieträgerbauteil (4) nach einem der vorhergehenden Ansprüche umfasst.

13. Verfahren zur Herstellung eines Batterieträgerbauteils (4), insbesondere eines Batterieträgerbauteils (4) nach einem der Ansprüche 1 bis 11, oder eines Batterieträgers (2), insbesondere eines Batterieträgers (2) nach Anspruch 12, umfassend die Schritte:
- Bereitstellen (100) von zumindest einem, insbesondere im Wesentlichen plattenförmigen, Batterieträgerboden (16) sowie von zumindest einer, insbesondere im Wesentlichen plattenförmigen, eine Lochstruktur aufweisende Schutzschicht (14),
- Anordnen (120) des zumindest einen Batterieträgerbodens (16) in einer ersten Werkzeughälfte sowie der zumindest einen Schutzschicht (14) in einer zweiten Werkzeughälfte,
- Aufbringen (140) von Schaummaterial auf den zumindest einen Batterieträgerboden (16),
- Schließen (160) der beiden Werkzeughälften,
- Expandieren (180) des Schaummaterials durch die Lochstruktur der Schutzschicht (14) in Aussparungen der zweiten Werkzeughälfte zur Bildung von sich durch die Lochstruktur erstreckenden Abstandshaltern (12),
- Aushärten (200) des Schaummaterials,
- Öffnen (220) der beiden Werkzeughälften und Auswerfen des Batterieträgerbauteils (4).

14. Verfahren nach Anspruch 13,
- wobei der zumindest eine Batterieträgerboden (16) und die zumindest eine Schutzschicht (14) derart in der ersten Werkzeughälfte und der zweiten Werkzeughälfte angeordnet werden, dass Batterieträgerboden (16) und Schutzschicht (14) im geschlossenen Zustand der beiden Werkzeughälften zueinander beabstandet sind.

15. Verfahren nach einem der Ansprüche 13 oder 14,
- wobei ein durch die beiden Werkzeughälften im geschlossenen Zustand gebildeter Innenraum belüftet wird.
